# EUROPÄISCHE PATENTANMELDUNG

(11) **EP 2 214 295 A1**
(43) Veröffentlichungstag der Anmeldung: **04.08.2010**
(21) Anmeldenummer: 09001267.5
(22) Anmeldetag: 29.01.2009
(51) Int. Cl.: H02K 19/26, H02K 19/36, H02K 11/04

(54) **Erregersystem**

(71) Anmelder: Siemens Aktiengesellschaft, 80333 München (DE)
(72) Erfinder: Blinn, Axel, 40477 Düsseldorf (DE); Cravero, Leandro, Dr., 45479 Mülheim an der Ruhr (DE); Evers, Christoph, 45721 Haltern am See (DE); Klocke, Meinolf, Dr., 58452 Witten (DE); Nierhoff, Gerhard, 45481 Mülheim an der Ruhr (DE); Wibbelhoff, Oliver, Dr., 46537 Dinslaken (DE)

(57) **Zusammenfassung**

Ein Erregersystem (1), insbesondere für einen Synchrongenerator, mit einem Stator (2) und einem Rotor (4), welcher eine Erregerspulenanordnung aufweist, die über eine Energiezuführung (6) von einer externen Stromquelle (10) gespeist wird, soll bei einem besonders geringen Wartungsaufwand eine besonders variable Verwendbarkeit des Synchrongenerators ermöglichen. Dazu umfasst die Energiezuführung (6) eine Statorspulenanordnung (14) und eine Rotorspulenanordnung (16), die einen Transformator bilden.

## Beschreibung

Die Erfindung betrifft ein Erregersystem, insbesondere für einen Synchrongenerator, mit einem Stator und einem Rotor, welcher eine Erregerspulenanordnung aufweist, die über eine Energiezuführung von einer externen Stromquelle gespeist wird.

Ein Synchrongenerator ist ein elektrischer Generator, bei dem der durch Spulen oder Dauermagneten magnetisierte, sich drehende Rotor in den Spulen des Stators eine Spannung induziert. Der von außen, beispielsweise durch eine Gas- oder Dampfturbine angetriebene Rotor hat im Prinzip radial auf der Welle angeordnete Magneten. Deren magnetisches Feld wird bei höheren Leistungen wie z. B. in Kraftwerken üblich mit Elektromagneten erzeugt.

Der für die Erregung der Pole dieser Elektromagneten des Rotors erforderliche Gleichstrom muss im Rotor bereitgestellt werden. Der Strom muss also entweder von Außen über eine Energiezuführung in den Rotor übertragen werden oder aus der Rotation durch Umwandlung mechanischer Leistung erzeugt werden.

Bei der statischen Erregung, bei der die Erregerspulenanordnung über eine Energiezuführung von einer externen Stromquelle gespeist wird, umfasst die Energiezuführung üblicherweise auf der Welle montierte Schleifringe und Kohle- oder Elektrographitbürsten, über die der Strom aus einer gesteuerten Gleichstromquelle, zum Beispiel über einen Thyristorgleichrichter eingespeist wird. Der Bürstenapparat sowie der unvermeidbare Bürstenabrieb bedeuten hierbei jedoch einen nicht zu vernachlässigenden Wartungsaufwand. Außerdem beschränkt die maximal zulässige Geschwindigkeit an der Kontaktfläche den Schleifringdurchmesser und somit auch den Durchmesser der Schleifringwelle, was insbesondere die Laufruhe bei Einwellenanlagen ungünstig beeinflussen kann.

Alternativ kann der Strom für die Erregerspulenanordnung direkt aus der mechanischen Bewegung des Wellenstranges gewonnen werden. Dazu ist üblicherweise eine weitere elektrische Maschine im Wellenstrang vorgesehen, die als Außenpolsynchrongenerator aus der Drehbewegung des Rotors ein Drehstromsystem in ihrer rotierenden Ankerwicklung erzeugt. Dieses wird über einen ebenfalls auf dem Rotor angeordneten Gleichrichter der eigentlichen Erregerspulenanordnung des Generators zugeführt und stellt somit den Strom für die Erregerspule des Synchrongenerators zur Verfügung. Damit ist jedoch die Magnetisierung der Erregerspulenanordnung von einer Bewegung des Rotors abhängig. Eine Erregung des Generators im Stillstand durch eine externe Stromquelle, wie beispielsweise beim Anfahren des Generators über Anfahrumrichter notwendig, ist damit nicht möglich. Dies kann die Verwendbarkeit des Generators für unterschiedliche Kraftwerkstypen erheblich einschränken.

Der Erfindung liegt daher die Aufgabe zugrunde, ein Erregersystem, insbesondere für einen Synchrongenerator, der oben genannten Art anzugeben, das bei einem besonders geringen Wartungsaufwand eine besonders variable Verwendbarkeit des Synchrongenerators ermöglicht.

Diese Aufgabe wird erfindungsgemäß gelöst, indem die Energiezuführung zur Erregerspulenanordnung eine Statorspulenanordnung und eine Rotorspulenanordnung umfasst, die einen Transformator bilden.

Die Erfindung geht dabei von der Überlegung aus, dass ein besonders geringer Wartungsaufwand dadurch erreicht werden könnte, dass die Erregerstromversorgung des Synchrongenerators berührungslos bleibt, d. h. keine Schleifringe oder Bürstenapparate vorgesehen sind. Dies würde auch bereits die Flexibilität bei der Konstruktion des Wellenstranges erhöhen, da Randparameter wie z. B. eine Maximalgeschwindigkeit an der Kontaktfläche nicht beachtet werden müssten. Um dabei gleichzeitig eine besonders variable Verwendbarkeit zu erreichen, sollte jedoch auch ein Anfahren des Generators aus dem Stillstand ermöglicht werden. Dies ist erreichbar, indem die Stromzufuhr dennoch über eine externe Stromquelle erfolgt, so dass auch im Stillstand des Synchrongenerators eine Spannung an der Erregerspulenanordnung aufgebaut werden kann und die Erregerwicklung somit bestromt werden kann.

Um dies zu erreichen, sollte die Einspeisung der externen Spannung in die Erregerspulenanordnung berührungslos erfolgen. Eine berührungslose Übertragung elektrischer Energie ist dabei über ein elektromagnetisches Feld möglich. Mittels einer externen Energiequelle sollte daher ein magnetisches Feld durch eine Spulenanordnung auf dem Stator erzeugt werden, welches wiederum in einer Spulenanordnung auf dem Rotor eine Spannung induziert. Statorspulenanordnung und Rotorspulenanordung bilden also einen Transformator, durch den eine berührungslose Energieübertragung möglich ist.

In vorteilhafter Ausgestaltung ist die Statorspulenanordnung und/oder die Rotorspulenanordnung an magnetisch permeablen, koaxial zum Rotor angeordneten Ringen angeordnet. Dabei sollten die Spulen jeweils in Nuten der Ringe eingebettet sein. Die magnetisch permeablen Ringe wirken dann als jeweilige Joche des Transformators. Zur Vermeidung von Wirbelströmen in den Jochen sollte deren elektrische Leitfähigkeit in Umfangsrichtung durch eine Laminierung oder geeignete Materialwahl (z. B. Ferrite) reduziert werden. Die beiden Joche gewährleisten über einen geringen Luftspalt eine effiziente magnetische Kopplung der beiden Wicklungen der Rotor- und der Statorspulenanordnung. Somit ist eine besonders gute Energieübertragung von der externen Stromquelle in die Erregerspulenanordnung möglich. Auf Grund der axialen Ausrichtung des Magnetfeldes in den Jochen und einer weitgehenden Unabhängigkeit von der Umfangskoordinate ist die Kopplung rein transformatorisch und unabhängig vom Bewegungszustand des rotierenden Sekundärteils, d. h. der Rotorspulenanordnung. Durch gezielte Führung des magnetischen Flusses in den Jochen ist nur eine geringe Beaufschlagung der Welle mit Streufluss zu befürchten.

In weiterer vorteilhafter Ausgestaltung ist die Statorspulenanordnung und/oder die Rotorspulenanordung in der Art einer Wanderfeldwicklung angeordnet. Die Wanderfeldwicklung erzeugt - bedingt durch die Phasenfolge der Wicklungszonen in axialer Richtung "+U, -W, +V, -U, +W, -V" - eine im Luftspalt axial fortschreitende Magnetfeldwelle, ähnlich wie bei Linearmotoren und im Gegensatz zu den stehenden Wechselfeldern gewöhnlicher Transformatoren. Die Wanderfeldwicklung sollte dreiphasig und gegebenenfalls mehrpolig ausgelegt sein. Eine derartige Wanderfeldwicklung ermöglicht eine weitgehende Unempfindlichkeit der magnetischen Kopplung gegen axiale Verschiebungen des rotierenden Sekundärteils, d. h. der Rotorspulenanordnung.

Vorteilhafterweise umfasst das Erregersystem einen dem Rotor zugeordneten Gleichrichter. Dadurch kann die in der Rotorspulenanordung induzierte Spannung besonders einfach der Erregerspulenanordnung des Synchrongenerators als Gleichspannung zur Verfügung gestellt werden.

Da durch die Stator- und Rotorspulenanordnung eine berührungslose Stromversorgung der Erregerwicklung des Synchrongenerators auch im Stillstand möglich ist, kann der Synchrongenerator auch aus dem Stillstand mittels einer externen Stromquelle angefahren werden. Dazu ist mit der der Erregerspulenanordnung zugeordneten Spulenanordnung des Stators vorteilhafterweise ein Anfahrumrichter verbunden. Über diesen z. B. als Stromzwischenkreisumrichter ausgelegten Anfahrumrichter können in Gasturbinenanlagen die Statorwicklungen der Synchrongeneratoren beim Anfahrvorgang gespeist werden.

In vorteilhafter Ausgestaltung ist der Rotor des Synchrongenerators mit einer Welle einer Dampf- und/oder Gasturbine verbunden. Ein derartiger Synchrongenerator eignet sich nämlich besonders gut für den Einsatz in Verbindung mit einer Gas- oder Dampfturbine.

Dabei ist ein derartiger Synchrongenerator vorteilhafterweise Bestandteil eines Gas- und Dampfturbinenkraftwerks.

Die mit der Erfindung erzielten Vorteile bestehen insbesondere darin, dass durch eine einen Transformator bildende Stator- und Rotorspulenanordnung eine berührungslose Stromversorgung der Erregerspulenanordnung des Synchrongenerators möglich wird. Dadurch gewährleistet diese Lösung einerseits die Berührungsfreiheit des Erregersatzes mit Hilfserregermaschine, Haupterregermaschine und rotierendem Gleichrichter, andererseits verbindet sie diese aber auch mit der Rotationsunabhängigkeit der statischen Erregung. Sie verbindet damit die Wartungsfreundlichkeit des Erregermaschinensatzes mit rotierendem Gleichrichter mit der Stationarität der Schleifringerregung, die ein Anfahren über Anfahrumrichter in Gasturbinenanlagen ermöglicht, ohne an die Beschränkungen des Wellendurchmessers aus einer maximalen Kontaktgeschwindigkeit gebunden zu sein. Dies bedeutet insgesamt eine besonders hohe Flexibilität bei der Konstruktion und dem Betrieb der Turbinenanlage sowie einen besonders geringen Wartungsaufwand.

Ein Ausführungsbeispiel der Erfindung wird anhand einer Zeichnung näher erläutert. Darin zeigt die einzige
- FIG: schematisch einen Halbschnitt durch ein Erregersystem mit einem Transformator und einem rotierenden Gleichrichter.

Das Erregersystem 1 nach der FIG umfasst einen Stator 2 sowie einen Rotor 4, wobei letzterer üblicherweise in einem Wellenstrang mit dem Rotor eines Synchrongenerators und mit einer Dampf- oder Gasturbine zur Aufnahme einer mechanischen Bewegung gekoppelt ist. Der Synchrongenerator umfasst dabei eine nicht näher gezeigte Erregerspulenanordnung, welche von dem durch das Erregersystem 1 zugeführten Strom durchflossen wird und durch ihre Rotationsbewegung eine Spannung in einer ihr zugeordneten Spulenanordnung erregt, die sodann in ein Stromnetz eingespeist werden kann.

Dieser in der Erregerwicklung des Generators zur Erzeugung des Magnetfelds notwendige Strom wird dabei über eine Energiezuführung 6 den Anschlüssen 8 der Erregerwicklung zugeführt. Als Stromversorgung dient dabei eine externe Stromquelle 10, z. B. ein Kraftwerkmittelspannungsnetz, die über einen Frequenzumrichter 12 letztlich den Strom für die Erregerwicklung zur Verfügung stellt.

Um eine Zuführung des Stroms in die Erregerspulenanordnung berührungslos zu ermöglichen, umfasst das Erregersystem 1 eine Statorspulenanordnung 14 sowie eine Rotorspulenanordnung 16, welche zusammen mit jeweiligen magnetisch permeablen Jochen einen Transformator bilden. Der Strom aus dem Frequenzumrichter 12 erzeugt durch die Statorspulenanordnung 14 ein magnetisches Feld, welches in der Rotorspulenanordnung 16 wiederum eine Spannung induziert. Diese sorgt dann über einen Gleichrichter 18, der auf dem Rotor 4 montiert ist, für eine Zuführung von Gleichstrom zur Stromversorgung 8 der Erregerspulenanordnung.

Durch den schmalen Luftspalt 20 zwischen der Statorspulenanordnung 14 und der Rotorspulenanordnung 16 ist einerseits eine besonders gute magnetische Kopplung zwischen Statorspulenanordnung 14 und Rotorspulenanordnung 16 gewährleistet, andererseits bleibt die Stromversorgung vollkommen berührungslos, woraus ein besonders geringer Wartungsaufwand des Erregersystems 1 resultiert.

Sowohl Statorspulenanordnung 14 als auch Rotorspulenanordnung 16 umfassen dabei dreiphasige und gegebenenfalls mehrpolige Wanderfeldwicklungen, die in magnetisch permeable, als jeweilige Joche fungierende Ringe eingebettet sind. Sie bilden dadurch einen Wanderfeldtransformator mit axialem Fluss des Magnetfelds.

Die dargestellte Anordnung des Erregersystems 1 ermöglicht eine berührungslose externe Stromzuleitung zur Erregerspulenanordnung des Synchrongenerators. Dadurch ist - aufgrund der Berührungslosigkeit - ein besonders geringer Wartungsaufwand zu erwarten. Weiterhin ist einerseits eine besonders hohe Flexibilität bei der Konstruktion der Erregerwelle gegeben, da keine Maximalgeschwindigkeit und Maximalradius aufgrund der Beschränkungen von Schleifkontakten einzuhalten sind, andererseits aber auch eine besonders hohe Flexibilität im Betrieb, da die Erregerspulen auch im Stillstand des Rotors 4 bestromt werden können. Dadurch ist der Synchrongenerator auch über einen Anfahrumrichter aus dem Stillstand anfahrbar, was eine besonders gute Anwendung in einem Gas- oder Gas- und Dampfturbinenkraftwerk ermöglicht.

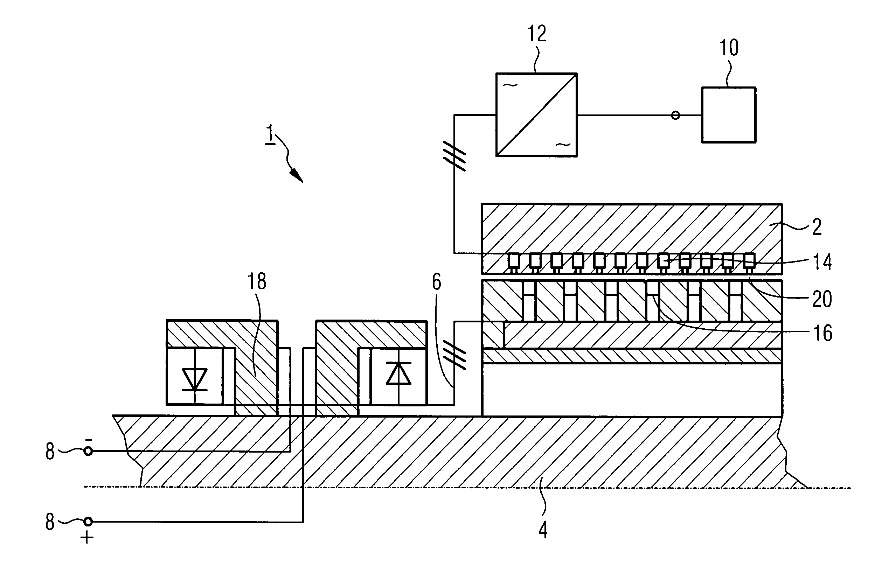

## Patentansprüche

1. Erregersystem (1),
insbesondere für einen Synchrongenerator,
mit einem Stator (2) und einem Rotor (4),
welcher eine Erregerspulenanordnung aufweist, die über eine Energiezuführung (6) von einer externen Stromquelle (10) gespeist wird,
wobei die Energiezuführung (6) eine Statorspulenanordnung (14) und eine Rotorspulenanordnung (16) umfasst, die einen Transformator bilden.

2. Erregersystem (1) nach Anspruch 1,
bei dem die Statorspulenanordnung (14) und/oder die Rotorspulenanordnung (16) an magnetisch permeablen, koaxial zum Rotor (4) angeordneten Ringen angeordnet ist.

3. Erregersystem (1) nach Anspruch 1 oder 2,
bei dem die Statorspulenanordnung (14) und/oder die Rotorspulenanordnung (16) in der Art einer Wanderfeldwicklung angeordnet ist.

4. Erregersystem (1) nach einem der Ansprüche 1 bis 3,
das einen dem Rotor (4) zugeordneten Gleichrichter (18) umfasst.

5. Erregersystem (1) nach einem der Ansprüche 1 bis 4,
bei dem der Stator (2) eine der Erregerspulenanordnung zugeordnete Spulenanordnung umfasst, die mit einem Anfahrumrichter verbunden ist.

6. Erregersystem (1) nach einem der Ansprüche 1 bis 5,
bei dem der Rotor (4) mit einer Welle einer Dampf- und/oder Gasturbine verbunden ist.

7. Synchrongenerator mit einem Erregersystem (1) nach einem der Ansprüche 1 bis 6.

8. Gas- und Dampfturbinenkraftwerk mit einem Synchrongenerator nach Anspruch 7.
